# EUROPEAN PATENT APPLICATION

(11) **EP 4 319 090 A1**
(43) Date of publication of application: **07.02.2024**
(21) Application number: 22778574.8
(22) Date of filing: 16.03.2022
(51) Int. Cl.: H04L 45/02, H04W 8/18

(54) **PATH SUBSCRIPTION METHOD, APPARATUS AND SYSTEM, AND STORAGE MEDIUM**

(30) Priority: 29.03.2021 CN 202110335487
(71) Applicant: Huawei Technologies Co., Ltd., Longgang Shenzhen, Guangdong 518129 (CN)
(72) Inventor: LIU, Bing, Shenzhen, Guangdong 518129 (CN); MAO, Jianwei, Shenzhen, Guangdong 518129 (CN); CHEN, Xia, Shenzhen, Guangdong 518129 (CN); XU, Ling, Shenzhen, Guangdong 518129 (CN)
(74) Representative: Huawei European IPR
(86) International application number: PCT/CN2022/081235
(87) International publication number: WO 2022/206391

(57) **Abstract**

This application discloses a path subscription method, apparatus, and system, and a storage medium, and belongs to the communication field. The method includes: A first network device receives a first subscription request sent by a first subscription device. The first subscription request includes an identifier of the first subscription device and an identifier of a destination device. The first network device obtains first subscription data based on the identifier of the first subscription device and the identifier of the destination device. The first subscription data includes an identifier of each path in N paths, N is greater than 1, and any path in the N paths is used to implement communication between the first subscription device and the destination device. The first network device sends a first subscription response to the first subscription device. The first subscription response includes the first subscription data. In this application, flexibility of path planning can be improved, and load of a control device can be reduced.

## Description

This application claims priority to Chinese Patent Application No. 202110335487.9, filed on March 29, 2021 and entitled "PATH SUBSCRIPTION METHOD, APPARATUS, AND SYSTEM, AND STORAGE MEDIUM", which is incorporated herein by reference in its entirety.

### TECHNICAL FIELD

This application relates to the communication field, and in particular, to a path subscription method, apparatus, and system, and a storage medium.

### BACKGROUND

Currently, a terminal may send a request to a control device of a bearer network, and the request includes a device identifier of a destination device and a service requirement. The control device determines a path between the terminal and the destination device based on the request, and the path meets the service requirement of the terminal. The control device sends a response to the terminal, and the response includes an identifier of the path that meets the service requirement of the terminal. The terminal transmits service data between the terminal and the destination device based on the path determined by the control device. When the path determined by the control device no longer meets the service requirement of the terminal, the terminal needs to re-request a network management device to re-determine, for the terminal, a path that meets the service requirement, resulting in poor flexibility of path planning, and increasing load of the control device.

### SUMMARY

This application provides a path subscription method, apparatus, and system, and a storage medium, to increase flexibility of path planning and reduce load of a control device.

According to a first aspect, this application provides a path subscription method. In the method, a first network device receives a first subscription request sent by a first subscription device. The first subscription request includes an identifier of the first subscription device and an identifier of a destination device. The first network device obtains first subscription data based on the identifier of the first subscription device and the identifier of the destination device. The first subscription data includes an identifier of each path in N paths, N is greater than 1, and any path in the N paths is used to implement communication between the first subscription device and the destination device. The first network device sends a first subscription response to the first subscription device. The first subscription response includes the first subscription data.

The first network device is a device that communicates with the first subscription device in the network. After receiving the first subscription request, the first network device obtains identifiers of the N paths that implement communication between the first subscription device and the destination device, and sends the first subscription data to the first subscription device. The first subscription data includes the identifiers of the N paths, and the first subscription device may select a path based on the first subscription data. In this way, for each subscription device that communicates with the first network device, the first network device is responsible for obtaining identifiers of a plurality of paths for the subscription devices, and then each subscription device selects a path used to communicate with the destination device in the plurality of paths. Compared with a current situation in which a control device centrally determines the path for all subscription devices in the network, this improves flexibility of path planning, and reduces load of the control device.

In a possible implementation, the first network device receives a second subscription request sent by the first subscription device. The second subscription request includes an identifier of each path in M paths, M is greater than or equal to 1, and the M paths are included in the N paths. The first network device obtains a performance parameter of each path in the M paths. The first network device sends a second subscription response to the first subscription device. The second subscription response includes the performance parameter of each path in the M paths. Because the second subscription response includes the performance parameter of each path in the M paths, the first subscription device may select, based on the performance parameter of each path in the M paths, the path used to communicate with the destination device, so that a path that meets a service requirement can be selected.

In another possible implementation, the first subscription data further includes a performance parameter of each path in the N paths. In this way, the first subscription device selects, based on the performance parameter of each path in the N paths, M paths that meet the service requirement, and the first network device requests to subscribe to the path that meets the service requirement.

In another possible implementation, the first network device receives the second subscription request sent by the first subscription device. The second subscription request includes the identifier of each path in the M paths, M is greater than or equal to 1, and the M paths are paths whose performance parameters meet the service requirement in the N paths. Because the M paths are the paths whose performance parameters meet the service requirement in the N paths, the M paths subscribed by the first network device for the first subscription device are all paths that meet the service requirement. The first network device pushes the performance parameters of the M paths to the first subscription device, to ensure that the performance parameters of the M paths meet the service requirement as much as possible, so that the first subscription device can select, based on the performance parameters of the M paths, a path that currently meets the service requirement, to ensure that a requirement for transmitting a service between the first subscription device and the destination device is met.

In another possible implementation, the first network device periodically obtains the performance parameter of each path in the M paths. The first network device periodically sends second subscription data to the first subscription device. The second subscription data includes the identifier and the performance parameter of each path in the M paths. In this way, the first subscription device may select, based on the performance parameter of each path in the M paths, the path that currently meets the service requirement, to ensure that the requirement for transmitting the service between the first subscription device and the destination device is met.

In another possible implementation, the first network device obtains the performance parameter of each path in the M paths. The first network device sends third subscription data to the first subscription device after a performance parameter of an i^{th} path in the M paths exceeds a threshold. The third subscription data includes the performance parameter of the i^{th} path. Because the performance parameter of the i^{th} path exceeds the threshold, quality of the i^{th} path is high, and meets the service requirement of the first subscription device, to ensure that the first subscription device can select the path that meets the service requirement. In addition, because the third subscription data includes the performance parameter of the i^{th} path, compared with subscription data including performance parameters of the M paths, a data amount of the third subscription data may be reduced, and then occupation of network resources is reduced.

In another possible implementation, the first network device periodically obtains the performance parameter of each path in the N paths. The first network device periodically sends fourth subscription data to the first subscription device. The fourth subscription data includes the identifier and the performance parameter of each path in the N paths. In this way, the first subscription device may select, based on the performance parameter of each path in the N paths, the path that currently meets the service requirement, to ensure that the requirement for transmitting the service between the first subscription device and the destination device is met.

In another possible implementation, the first network device obtains the performance parameter of each path in the N paths. The first network device sends fifth subscription data to the first subscription device after a performance parameter of a j^{th} path in the N paths exceeds a threshold. The fifth subscription data includes the performance parameter of the j^{th} path. Because the performance parameter of the j^{th} path exceeds the threshold, quality of the j^{th} path is high, and meets the service requirement of the first subscription device, to ensure that the first subscription device can select the path that meets the service requirement. In addition, because the fifth subscription data includes the performance parameter of the j^{th} path, compared with subscription data including performance parameters of the N paths, a data amount of the fifth subscription data may be reduced, and then the occupation of network resources is reduced.

In another possible implementation, the first network device sends a third subscription request to the control device. The third subscription request includes the identifier of the first subscription device and the identifier of the destination device. The first network device receives a third subscription response sent by the control device. The third subscription response includes the first subscription data.

In another possible implementation, the first network device obtains the first subscription data based on the cached identifier of each path in the N paths. In this way, the control device does not need to be requested to compute the N paths, and then load of the control device is reduced.

According to a second aspect, this application provides a path subscription method. In the method, a first subscription device sends a first subscription request to a first network device. The first subscription request includes an identifier of the first subscription device and an identifier of a destination device. The first subscription device receives a first subscription response sent by the first network device. The first subscription response includes first subscription data, the first subscription data includes an identifier of each path in N paths, N is greater than 1, and any path in the N paths is used to implement communication between the first subscription device and the destination device.

The first network device is a device that communicates with the first subscription device in a network. The first subscription device sends the first subscription request to the first network device, to request the first network device to obtain identifiers of the N paths that implement communication between the first subscription device and the destination device. The first subscription device selects a path based on the first subscription data. In this way, for each subscription device that communicates with the first network device, the first network device is responsible for obtaining identifiers of a plurality of paths for subscription devices, and then each subscription device selects a path used to communicate with the destination device in the plurality of paths. Compared with a current situation in which a control device centrally determines the path for all subscription devices in the network, this improves flexibility of path planning, and reduces load of the control device.

In a possible implementation, the first subscription device selects M paths from the N paths. M is greater than or equal to 1. The first subscription device sends a second subscription request to the first network device. The second subscription request includes an identifier of each path in the M paths. The first subscription device receives a second subscription response sent by the first network device. The second subscription response includes a performance parameter of each path in the M paths. Because the second subscription response includes the performance parameter of each path in the M paths, the first subscription device selects, based on the performance parameter of each path in the M paths, the path used to communicate with the destination device, so that a path that meets a service requirement can be selected.

In another possible implementation, the first subscription data further includes a performance parameter of each path in the N paths. The first subscription device selects, from the N paths, M paths whose performance parameters meet the service requirement. M is greater than or equal to 1. The first subscription device sends a second subscription request to the first network device. The second subscription request includes the identifier of each path in the M paths. Because the first subscription device selects, from the N paths, the M paths whose performance parameters meet the service requirement, the M paths subscribed by the first network device for the first subscription device are all paths that meet the service requirement. The first network device pushes the performance parameters of the M paths to the first subscription device, to ensure that the performance parameters of the M paths meet the service requirement as much as possible, so that the first subscription device can select, based on the performance parameters of the M paths, a path that currently meets the service requirement, to ensure that a requirement for transmitting a service between the first subscription device and the destination device is met.

In another possible implementation, the first subscription device receives second subscription data periodically sent by the first network device. The second subscription data includes the identifier and the performance parameter of each path in the M paths. In this way, the first subscription device selects, based on the performance parameter of each path in the M paths, the path that currently meets the service requirement, to ensure that the requirement for transmitting the service between the first subscription device and the destination device is met.

In another possible implementation, the first subscription device receives third subscription data sent by the first network device. The third subscription data includes a performance parameter of an i^{th} path in the M paths, and the performance parameter of the i^{th} path exceeds a threshold. Because the performance parameter of the i^{th} path exceeds the threshold, quality of the i^{th} path is high, and meets the service requirement of the first subscription device, to ensure that the first subscription device can select the path that meets the service requirement. In addition, because the third subscription data includes the performance parameter of the i^{th} path, compared with subscription data including the performance parameters of the M paths, a data amount of the third subscription data may be reduced, and then occupation of network resources is reduced. The i^{th} path is any path in the M paths.

In another possible implementation, the first subscription device receives fourth subscription data periodically sent by the first network device. The fourth subscription data includes the identifier and the performance parameter of each path in the N paths. In this way, the first subscription device selects, based on the performance parameter of each path in the N paths, the path that currently meets the service requirement, to ensure that the requirement for transmitting the service between the first subscription device and the destination device is met.

In another possible implementation, the first subscription device receives fifth subscription data sent by the first network device. The fifth subscription data includes a performance parameter of a j^{th} path in the N paths, and the performance parameter of the j^{th} path exceeds a threshold. Because the performance parameter of the j^{th} path exceeds the threshold, quality of the j^{th} path is high, and meets the service requirement of the first subscription device, to ensure that the first subscription device can select the path that meets the service requirement. In addition, because the fifth subscription data includes the performance parameter of the j^{th} path, compared with subscription data including performance parameters of the N paths, a data amount of the fifth subscription data may be reduced, and then the occupation of network resources is reduced. The j^{th} path is any path in the N paths.

According to a third aspect, this application provides a path subscription apparatus, configured to perform the method in any one of the first aspect or the possible implementations of the first aspect. Specifically, the apparatus includes units configured to perform the method in any one of the first aspect or the possible implementations of the first aspect.

According to a fourth aspect, this application provides a path subscription apparatus, configured to perform the method according to any one of the second aspect or the possible implementations of the second aspect. Specifically, the apparatus includes units configured to perform the method in any one of the second aspect or the possible implementations of the second aspect.

According to a fifth aspect, this application provides a path subscription apparatus. The apparatus includes a processor and a memory. The processor and the memory may be connected through an internal connection. The memory is configured to store a program, and the processor is configured to execute the program in the memory, to enable the apparatus to complete the method in any one of the first aspect or the possible implementations of the first aspect.

According to a sixth aspect, this application provides a path subscription apparatus. The apparatus includes a processor and a memory. The processor and the memory may be connected through an internal connection. The memory is configured to store a program, and the processor is configured to execute the program in the memory, to enable the apparatus to complete the method in any one of the second aspect or the possible implementations of the second aspect.

According to a seventh aspect, this application provides a computer program product. The computer program product includes a computer program stored in a computer-readable storage medium, and the computer program is loaded by a processor to implement the method in any one of the first aspect, the second aspect, the possible implementations of the first aspect, or the possible implementations of the second aspect.

According to an eighth aspect, this application provides a computer-readable storage medium, configured to store a computer program. The computer program is loaded by a processor to perform the method in any one of the first aspect, the second aspect, the possible implementations of the first aspect, or the possible implementations of the second aspect.

According to a ninth aspect, this application provides a chip, including a memory and a processor. The memory is configured to store computer instructions, and the processor is configured to invoke the computer instructions from the memory and run the computer instructions, to implement the method in any one of the first aspect, the second aspect, the possible implementations of the first aspect, or the possible implementations of the second aspect.

According to a tenth aspect, this application provides a path subscription system. The system includes the apparatus in the third aspect and the apparatus in the fourth aspect, or the system includes the apparatus in the fifth aspect and the apparatus in the sixth aspect.

### BRIEF DESCRIPTION OF DRAWINGS

FIG. 1 is a schematic diagram of a network architecture according to an embodiment of this application;
FIG. 2 is a schematic diagram of another network architecture according to an embodiment of this application;
FIG. 3 is a flowchart of a path subscription method according to an embodiment of this application;
FIG. 4 is a flowchart of another path subscription method according to an embodiment of this application;
FIG. 5 is a schematic diagram of a structure of a path subscription apparatus according to an embodiment of this application;
FIG. 6 is a schematic diagram of a structure of another path subscription apparatus according to an embodiment of this application;
FIG. 7 is a schematic diagram of a structure of still another path subscription apparatus according to an embodiment of this application;
FIG. 8 is a schematic diagram of a structure of yet another path subscription apparatus according to an embodiment of this application; and
FIG. 9 is a schematic diagram of a structure of a path subscription system according to an embodiment of this application.

### DESCRIPTION OF EMBODIMENTS

The following further describes in detail embodiments of this application with reference to accompanying drawings.

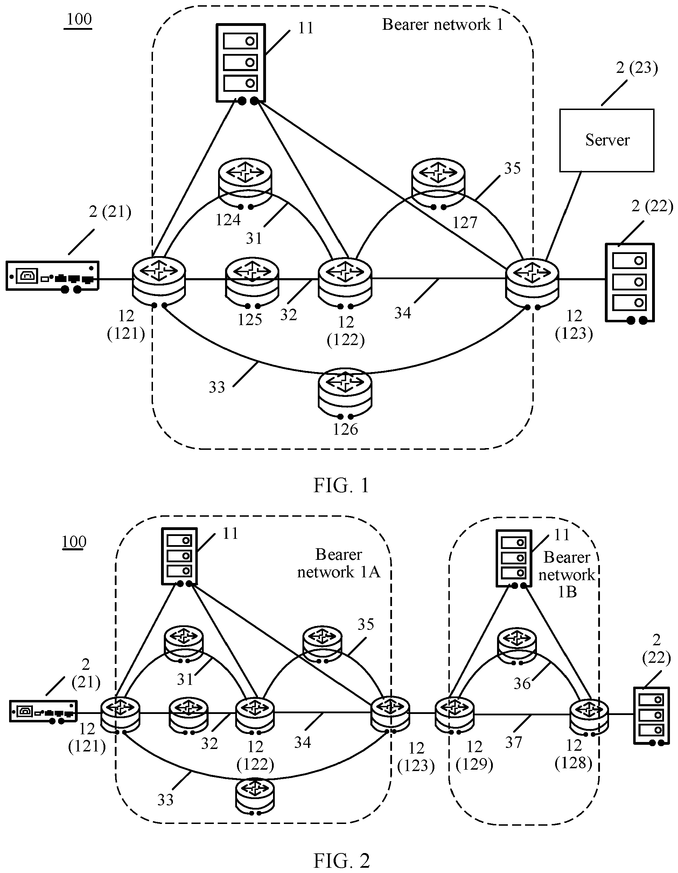

Referring to FIG. 1, an embodiment of this application provides a network architecture 100, including a bearer network 1 and a plurality of devices 2 that access the bearer network 1. The bearer network 1 includes a control device 11 and at least one network device 12. The control device 11 communicates with the at least one network device 12. A network connection is established between each network device in the at least one network device 12 and the control device 11, to implement communication between the network device and the control device 11. Certainly, there are other manners for implementing communication between the network device and the control device 11, which are not listed one by one herein. The plurality of devices 2 that access the bearer network 1 include devices such as a subscription device 21, a data center 22, and/or a server 23. For the devices 2 such as the subscription device 21, the data center 22, and/or the server 23, the devices 2 communicate with a boundary device of the bearer network 1. The devices 2 may perform one-hop connection on the boundary device. For example, referring to the bearer network 1 in FIG. 1, the bearer network 1 includes network devices 121, 122, and 123. The network devices 121 and 123 are boundary devices of the bearer network 1. The subscription device 21 communicates with the network device 121. The data center 22 communicates with the network device 123. The subscription device 21 may perform one-hop connection on the network device 121. The data center 22 may perform one-hop connection on the network device 123. The at least one network device 12 includes one or more of a provider edge (provider edge, PE), a router, a switch, a gateway, a base station, a user plane function (user plane function, UPF), a broadband network gateway (broadband network gateway, BNG), an optical network unit (optical network unit, ONU), an optical line terminal (optical line terminal, OLT), and the like. The boundary device of the bearer network 1 may include a device such as the PE. When the network architecture 100 is used in a wireless access scenario, the PE may be the UPF. When the network architecture 100 is used in a broadband access scenario, the PE may be the BNG. The subscription device 21 includes a terminal such as a customer-premises equipment (customer-premises equipment, CPE), a mobile phone, a computer, or the like.

For the subscription device 21, the subscription device 21 needs to communicate with a destination device, and the destination device includes devices such as the data center 22 and/or the server 23 that access the bearer network 1. To implement communication between the subscription device 21 and the destination device, a plurality of paths for implementing communication between the subscription device 21 and the destination device may be established. Each path in the plurality of paths includes one bearer network path, and the paths include different bearer network paths. The bearer network path in each path is a path between a first network device and a second network device, the first network device is a boundary device that communicates with the subscription device 21 in the bearer network 1, and the second network device is a boundary device that communicates with the destination device in the bearer network 1. In some embodiments, each path further includes a first path and a second path, the first path is a path between a subscription device and the first network device, and the second path is a path between the second network device and the destination device.

For each path in the plurality of paths, the bearer network path in the path includes at least one subpath, and the at least one subpath is connected in series to form one bearer network path. Each subpath is a path between two network devices in the bearer network 1. For the two network devices, the two network devices may be connected through at least one subpath, and the two network devices are endpoint devices of each subpath in the at least one subpath. For each subpath between the two network devices, the subpath may pass through one or more other network devices, but another network device may transparently transmit a packet between the two network devices, or the subpath may not pass through other network devices. For the subpath between the two network devices, a collection module may be deployed on the endpoint device of the subpath. The collection module is configured to collect a performance parameter of the subpath. For example, the collection module may be configured to collect a performance parameter such as latency and/or a packet loss rate of the subpath. There are two endpoint devices in the subpath. The collection module may be deployed on both the two endpoint devices, or the collection module is deployed on one of the two endpoint devices. In some embodiments, the collection module may be a probe or the like. For example, referring to FIG. 1, for the network devices 121, 122, and 123 that are included in the bearer network 1, the network device 121 is connected to the network device 122 through a subpath 31 and a subpath 32. The subpath 31 further passes through a network device 124. The network device 124 that the subpath 31 passes through transparently transmits a packet between the network device 121 and the network device 122. The subpath 32 further passes through a network device 125, and the network device 125 that the subpath 32 passes through transparently transmits the packet between the network device 121 and the network device 122. The network device 121 and the network device 122 are endpoint devices of the subpath 31 and the subpath 32. The network device 121 and/or the network device 122 are/is configured to collect a performance parameter of the subpath 31 and/or a performance parameter of the subpath 32. The network device 121 is connected to the network device 123 through a subpath 33. The subpath 33 further passes through a network device 126. The network device 126 that the subpath 33 passes through transparently transmits a packet between the network device 121 and the network device 123. The network device 121 and the network device 123 are endpoint devices of the subpath 33. The network device 121 and/or the network device 123 are/is configured to collect a performance parameter of the subpath 33. In addition, the network device 122 is connected to the network device 123 through a subpath 34 and a subpath 35. The subpath 34 does not pass through another network device, but the subpath 35 further passes through a network device 127. The network device 127 that the subpath 35 passes through transparently transmits a packet between the network device 122 and the network device 123. The network device 122 and the network device 123 are endpoint devices of the subpath 34 and the subpath 35. The network device 122 and/or the network device 123 are/is configured to collect a performance parameter of the subpath 34 and/or a performance parameter of the subpath 35.

For the network architecture 100 in FIG. 1, it is assumed that the data center 22 is the destination device that needs to communicate with the subscription device 21, the first network device is the network device 121 that communicates with the subscription device 21, and the second network device is the network device 123 that communicates with the data center 23. For the plurality of paths for implementing communication between the subscription device 21 and the data center 23, each path in the plurality of paths includes the bearer network path between the network device 121 and the network device 123. It is assumed that the plurality of paths includes a path A, a path B, and a path C, a bearer network path in the path A includes two subpaths, and the two subpaths are the subpath 31 and the subpath 34 separately. A bearer network path in the path B includes two subpaths, and the two subpaths are the subpath 32 and the subpath 34 separately. A bearer network path in the path C includes a subpath, and the subpath is the subpath 33. The subscription device 21 communicates with a data center 4 through the path A, the path B, and/or the path C.

In some embodiments, the bearer network 1 may further include another device. For example, the bearer network 1 may further include one or more of at least one storage device, an authentication server (not shown in the figure), and the like. Each storage device is configured to provide a storage service for the control device 11 and/or the network device 12. The authentication server is configured to authenticate the subscription device 21.

In some embodiments, a bearer network accessed by the subscription device 21 and a bearer network accessed by the destination device are two different bearer networks. As a result, the path for implementing communication between the subscription device 21 and the destination device passes through a plurality of bearer networks. For example, referring to FIG. 2, it is assumed that the subscription device 21 and the data center 22 need to pass through a first bearer network 1A and a second bearer network 1B. The first network device that communicates with the subscription device 21 is the network device 121, and the second network device that communicates with the data center 22 is a network device 128. Therefore, for a plurality of paths for implementing communication between the subscription device 21 and the data center 22, each path in the plurality of paths includes one bearer network path between the network device 121 and the network device 128. It is assumed that the plurality of paths includes a path D, a path E, and a path F. A bearer network path in the path D includes the subpath 31, the subpath 34, a third path, and a subpath 37. The third path is a path between the network device 123 and the network device 129. A bearer network path in the path E includes the subpath 32, the subpath 34, the third path, and a subpath 36. A bearer network path in the path F includes the subpath 33, the third path, and the subpath 36.

It should be noted that the subscription device 21 may send a first subscription request to the first network device, to request the first network device to obtain identifiers of N paths. The N paths are paths used to implement communication between the subscription device 21 and the destination device, and N is an integer greater than 1. The subscription device 21 may further select M paths from the N paths, where M is an integer greater than or equal to 1, and send a second subscription request to the first network device, where the second subscription request includes identifiers of the M paths, to subscribe to the M paths for the subscription device 21 on the first network device. In this way, the first network device may push subscribed performance parameters of the M paths to the subscription device 21. The subscription device 21 selects one or more paths based on the performance parameters of the M paths, and implements communication between the subscription device 21 and the destination device by selecting the one or more paths. In this embodiment of this application, the path may be subscribed to by using any one of the following embodiments.

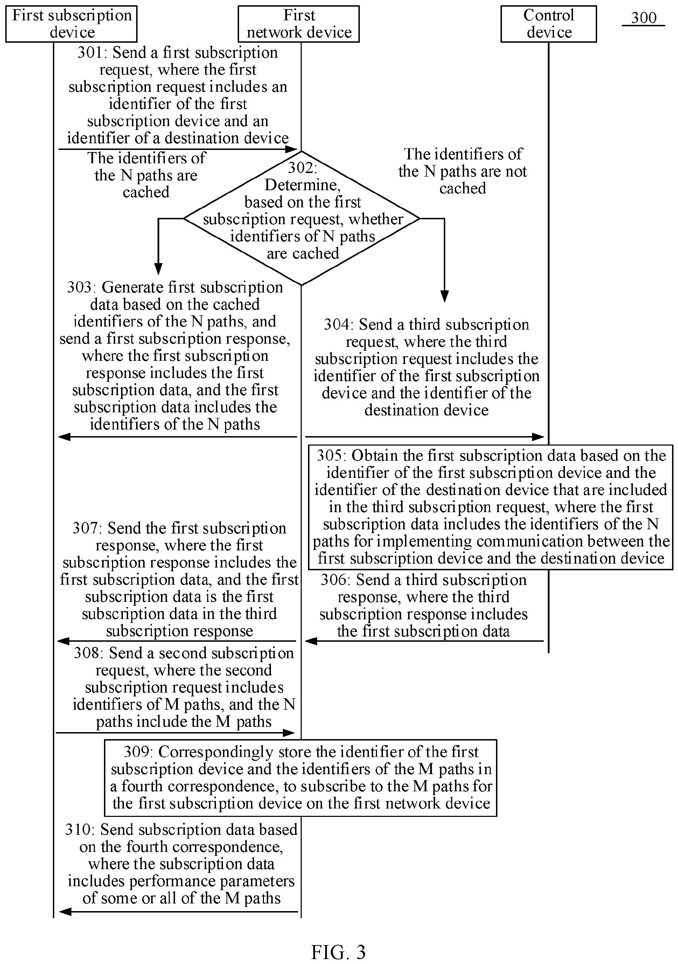

Referring to FIG. 3, an embodiment of this application provides a path subscription method 300. The method 300 is applied to the network architecture 100 in FIG. 1 or FIG. 2, and includes the following steps.

Step 301: A first subscription device sends a first subscription request to a first network device. The first subscription request includes an identifier of the first subscription device and an identifier of a destination device.

For example, the first subscription request requests to subscribe to a plurality of paths on the first network device, and the plurality of paths are paths for implementing communication between the first subscription device and the destination device. The destination device is a device that the first subscription device needs to access, and may be a data center, a server, a terminal device, or the like.

The first subscription device sends the first subscription request to the first network device by using the following operations 3011 to 3013. The operations 3011 to 3013 are as follows:

3011: The first subscription device sends a service discovery request to the first network device. The service discovery request includes an identifier of a subscription service.

The subscription service is used to subscribe to a path, and the path is a path for implementing communication between the first subscription device and the destination device. The subscription service is a service provided by the first network device.

In 3011, the first subscription device queries, by using the service discovery request, whether the first network device provides the subscription service. If the first network device provides the subscription service, it indicates that the first network device has a function for a subscription device to subscribe to the path. Therefore, the first subscription device may use the subscription service to subscribe to the plurality of paths for implementing communication between the first subscription device and the destination device.

In some embodiments, the identifier of the subscription service includes a service name of the subscription service and the like.

3012: The first network device receives the service discovery request, and sends a service discovery response to the first subscription device. The service discovery response includes a service address and a port number of the subscription service.

In 3012, the first network device receives the service discovery request; obtains, based on the identifier of the subscription service included in the service discovery request, the service address and the port number of the subscription service from a first correspondence, where each record in the first correspondence includes a service identifier, the service address, and the port number of the subscription service; and sends the service discovery response to the first subscription device, where the service discovery response includes the service address and the port number of the subscription service. Both the service address and the port number of the subscription service are an address and a port number on the first network device.

For example, the first correspondence is stored on the first network device, and the first network device obtains, based on the identifier of the subscription service included in the service discovery request, the service address and the port number of the subscription service from a locally stored first correspondence. Alternatively, the first correspondence is stored on a first storage device, and in addition to the service identifier, the service address, and the port number of the subscription service, each record in the first correspondence further includes an identifier of a network device. In other words, the first correspondence may store the service identifier, the service address, and the port number of the subscription service on different network devices. The first network device obtains, based on the identifier of the subscription service included in the service discovery request and an identifier of a first network device, the service address and the port number of the subscription service from the first correspondence stored on the first storage device.

3013: The first subscription device receives the service discovery response, and sends the first subscription request to the first network device based on the service address and the port number of the subscription service that are included in the service discovery response. The first subscription request includes the identifier of the first subscription device and the identifier of the destination device.

For example, a destination address of the first subscription request is the service address of the subscription service, a destination port number of the first subscription request is the port number of the subscription service, a source address of the first subscription request is the identifier of the first subscription device, and a payload of the first subscription request includes the identifier of the destination device.

In some embodiments, the first subscription request further includes a performance parameter type, the first subscription request further requests the first network device to push a performance parameter of a subscribed path, and a pushed performance parameter is a performance parameter corresponding to the performance parameter type.

In some embodiments, after receiving the service discovery response and before sending the first subscription request, the first subscription device further needs to perform authentication in an authentication server. An authentication process is as follows: The first subscription device sends an authentication request to the first network device. The authentication request includes a user account and a first authentication credential. The first network device receives the authentication request, and sends the authentication request to the authentication server. The authentication server receives the authentication request, performs authentication based on the user account and the first authentication credential that are included in the authentication request, and sends an authentication response to the first network device. The authentication response includes an authentication result. The first network device receives the authentication response, and sends the authentication response to the first subscription device. The first subscription device receives the authentication response, and sends the first subscription request to the first network device when the authentication result included in the authentication response is that the authentication succeeds.

In some embodiments, the authentication server includes a correspondence between the user account and a second authentication credential. The authentication server receives the authentication request, and obtains the corresponding second authentication credential from the correspondence based on the user account included in the authentication request. When the second authentication credential is the same as the first authentication credential, an obtained authentication result is that authentication succeeds, or when the second authentication credential is different from the first authentication credential, an obtained authentication result is that authentication fails. The first authentication credential includes a certificate and the like.

Step 302: The first network device receives the first subscription request, and determines, based on the first subscription request, whether identifiers of N paths are cached; and if the identifiers of the N paths are cached, performs step 303; or if the identifiers of the N paths are not cached, performs step 304. N is an integer greater than 1.

For example, each path in the N paths is used to implement communication between the first subscription device and the destination device. Each path includes a bearer network path between the first network device and a second network device, and the second network device is a network device that communicates with the destination device in a bearer network.

Before performing step 302, the first network device may cache an identifier of each path in the N paths. A detailed description of an identifier of a cached path is as follows: In addition to the first subscription device, the subscription device that communicates with the first network device further includes another subscription device. In addition to the first subscription device, a subscription device that needs to communicate with the destination device further includes another subscription device. The another subscription device has requested the first network device to subscribe to a path for implementing communication between the another subscription device and the destination device. A destination device that communicates with the first subscription device and a destination device that communicates with the another subscription device are the same device. When receiving a request from the another subscription device, the first network device obtains the identifiers of the N paths, and caches the identifiers of the N paths, where the N paths are used to implement communication between the another subscription device and the destination device. Therefore, in step 302, the first network device may determine that the identifier of each path in the N paths is cached, or may determine that path information of each path in the N paths is not cached.

In some embodiments, when the first network device obtains the identifiers of the N paths, the first network device correspondingly stores an identifier of the second network device and the identifiers of the N paths in a second correspondence, to cache the identifiers of the N paths.

In step 302, the first network device determines, based on the identifier of the destination device included in the first subscription request and the second correspondence, whether the identifiers of the N paths are cached.

For example, the first network device determines, based on the identifier of the destination device, the second network device that communicates with the destination device; queries the second correspondence based on the identifier of the second network device; and if the identifiers of the corresponding N paths are queried, determines that the identifiers of the N paths are cached; or if the identifiers of the corresponding N paths are not queried, determines that the identifiers of the N paths are not cached. For example, referring to FIG. 1, it is assumed that the first subscription device is a subscription device 21, the destination device is a data center 22, the first network device that communicates with the subscription device 21 is a network device 121, and the second network device that communicates with the data center 22 is a network device 123. Therefore, in step 302, the network device 121 receives the first subscription request sent by the subscription device 21. The first subscription request includes an identifier of the subscription device 21 and an identifier of the data center 22.

In addition, it is further assumed that a subscription device that communicates with the network device 121 further includes a second subscription device (not shown in the figure). If the second subscription device sends a subscription request to the network device 121 before step 302, the subscription request includes an identifier of the second subscription device and the identifier of the data center 22. The network device 121 obtains, based on the subscription request, N paths for implementing communication between the second subscription device and the data center 22, where N paths include a path A, a path B, and a path C; and correspondingly stores an identifier ID123 of the network device 123, an identifier IDA of the path A, IDB of the path B, and an identifier IDC of the path C in the second correspondence in Table 1. In this way, in step 302, after the network device 121 receives the first subscription request sent by the subscription device 21 (the first subscription device), the first subscription request includes the identifier of the subscription device 21 and the identifier of the data center 22 (the destination device). Based on the identifier of the data center 22, that the second network device that communicates with the data center 22 is the network device 123 is determined. The second correspondence in Table 1 is queried based on the identifier ID 123 of the network device 123, and the corresponding identifier IDA of the path A, IDB of the path B, and the identifier IDC of the path C are queried, to determine that the identifiers of the N paths are cached, where N=3.

**Table 1**

| Identifier of a second network device | Identifier of a path |
|---|---|
| ID123 | IDA, IDB, and IDC |
| ... | ... |

In some embodiments, the first network device includes a network topology. Therefore, the first network device determines, based on the identifier of the destination device and the network topology, the second network device that communicates with the destination device.

In some embodiments, the second correspondence is stored on the first network device, and the first network device queries, based on the identifier of the second network device, a locally stored second correspondence. Alternatively, the second correspondence is stored on the first storage device. In addition to the identifier of the second network device and the path information of the N paths, each record in the second correspondence further includes the identifier of the first network device. After determining the second network device that communicates with the destination device, the first network device queries, based on the identifier of the first network device and the identifier of the determined second network device, the second correspondence stored on the first storage device.

Step 303: The first network device generates first subscription data based on the cached identifiers of the N paths, and sends a first subscription response to the first subscription device. The first subscription response includes the first subscription data, the first subscription data includes the identifier of each path in the N paths, and step 308 is performed.

For example, for each cached path in the N paths, the path includes the bearer network path, and the bearer network path is the path between the first network device and the second network device. Therefore, the path can also implement a requirement of communication between the first subscription device and the destination device. Therefore, if the identifiers of the plurality of paths are cached, a control device does not need to be requested to compute a path for implementing communication between the first subscription device and the destination device, but the first subscription data is directly generated based on the cached identifiers of the plurality of paths. This can reduce load of the control device, save network resources, and improve efficiency of feeding back the first subscription data to the first subscription device. The first subscription data further includes a performance parameter of each path in the N paths. The performance parameter of the path includes one or more of latency, bandwidth, a packet loss rate, and the like. When the first subscription request includes the performance parameter type, the performance parameter of each path included in the first subscription data is a parameter corresponding to the performance parameter type.

For example, after another device has requested to subscribe to the N paths, the first network device sends a subscription request to the control device. The subscription request requests the control device to compute the N paths and subscribe to the N paths for the first network device on the control device. The control device records a subscription relationship between the first network device and the N paths, and sends the identifiers of the N paths to the first network device. The first network device receives the identifiers of the N paths sent by the control device, and then caches the identifiers of the N paths. The control device records the subscription relationship between the first network device and the N paths by using a third correspondence. During implementation, the control device may correspondingly store the identifier of the first network device and the identifier of each path in the N paths in the third correspondence, to record the subscription relationship between the first network device and the N paths. Then, the control device periodically sends the performance parameter of each path in the N paths to the first network device based on the subscription relationship.

In step 303, when the first subscription data further includes the performance parameter of each path in the N paths, the first network device further obtains the performance parameter of each path. A detailed description of obtaining the performance parameter is as follows: Because the control device records the subscription relationship between the first network device and the N paths, the control device periodically sends the performance parameter of each path in the N paths to the first network device. The first network device receives and caches the performance parameter of each path. In this way, when the first network device determines that the identifier of each path in the N paths is cached, the first network device obtains a latest received performance parameter of each path in the N paths. The first subscription data includes an obtained performance parameter of each path. In some embodiments, when the first subscription request includes the performance parameter type, the first network device obtains a latest received performance parameter of each path in the N paths based on the performance parameter type. The performance parameter of each path is a performance parameter corresponding to the performance parameter type.

For each path in the N paths, the path includes at least one subpath, the identifier of the path includes an identifier of each subpath in the at least one subpath, and the performance parameter of the path is obtained based on a performance parameter of each subpath in the at least one subpath. In some embodiments, the performance parameter of the path includes the performance parameter of each subpath in the at least one subpath. The performance parameter of the subpath includes a parameter such as the latency, and the performance parameter of each subpath in the at least one subpath is accumulated to obtain the performance parameter of the path. In some embodiments, the performance parameter of the subpath includes one or more of parameters such as the packet loss rate and the bandwidth, and one performance parameter is selected from the performance parameter of the at least one subpath as the performance parameter of the path. For example, when the performance parameter of the subpath includes the packet loss rate, a maximum packet loss rate is selected from the packet loss rate of the at least one subpath as the packet loss rate of the path. When the performance parameter of the subpath includes the bandwidth, minimum bandwidth is selected from the bandwidth of the at least one subpath as the performance parameter of the path.

For the at least one subpath included in the path, there is one subpath in the at least one subpath that is connected to the first network device. For ease of description, the subpath is referred to as a first subpath. A collection module may be deployed on the first network device. The collection module is configured to collect a performance parameter of the first subpath. The first network device may directly collect the performance parameter of the first subpath. In addition, the first network device receives a performance parameter of at least one second subpath sent by the control device. The at least one second subpath is a subpath that is included in the path and that is other than the first subpath, to obtain the performance parameter of each subpath included in the path. In other words, the performance parameter of each subpath includes a collected performance parameter of the first subpath and a received performance parameter of the at least one second subpath.

For example, referring to FIG. 1, in step 302, that the identifier of the path A, the identifier of the path B, and the identifier of the path C are cached is determined. The path A includes a subpath 31 and a subpath 34. Therefore, the identifier IDA of the path A includes an identifier ID31 of the subpath 31 and an identifier ID34 of the subpath 34. The identifier IDA of the path A may be represented as (ID31, ID34). The path B includes a subpath 32 and the subpath 34. Therefore, the identifier IDB of the path B includes an identifier ID32 of the subpath 32 and the identifier ID34 of the subpath 34. The identifier IDB of the path B may be represented as (ID32, ID34). The path C includes a subpath 33. Therefore, the identifier IDC of the path C includes an identifier ID33 of the subpath 33, and the identifier IDB of the path B may be represented as (ID33). The first subscription data includes the identifier of the path A, the identifier of the path B, and the identifier of the path C, that is, the first subscription data includes (ID31, ID34), (ID32, ID34), and (ID33). For a performance parameter of the path A, it is assumed that the performance parameter of the path A includes a performance parameter of the subpath 31 and a performance parameter of the subpath 34, and the subpath 31 is connected to the network device 121. Therefore, the network device 121 collects the performance parameter of the subpath 31 and receives the performance parameter of the subpath 34 sent by the control device, to obtain the performance parameter of the path A. For a performance parameter of the path B, it is assumed that the performance parameter of the path B includes a performance parameter of the subpath 32 and the performance parameter of the subpath 34, and the subpath 32 is connected to the network device 121. Therefore, the network device 121 collects the performance parameter of the subpath 32 and receives the performance parameter of the subpath 34 sent by the control device, to obtain the performance parameter of the path B. For a performance parameter of the path C, it is assumed that the performance parameter of the path C includes a performance parameter of the subpath 33. The network device 121 collects the performance parameter of the subpath 33, to obtain the performance parameter of the path C. The first subscription data further includes the performance parameter of the path A, the performance parameter of the path B, and the performance parameter of the path C. The network 121 sends the first subscription response to the subscription device 21. The first subscription response includes the first subscription data.

Step 304: The first network device sends a third subscription request to the control device. The third subscription request includes the identifier of the first subscription device and the identifier of the destination device.

For example, a source address of the third subscription request is the identifier of the first network device, a destination address is an identifier of the control device, and a payload includes the identifier of the first subscription device and the identifier of the destination device. The third subscription request requests the control device to compute the N paths for implementing communication between the first subscription device and the destination device, and subscribe to the N paths for the first network device on the control device.

Step 305: The control device receives the third subscription request, and obtains the first subscription data based on the identifier of the first subscription device and the identifier of the destination device that are included in the third subscription request. The first subscription data includes the identifiers of the N paths for implementing communication between the first subscription device and the destination device.

In step 305, the control device receives the third subscription request, determines, based on the identifier of the first subscription device included in the third subscription request, the first network device that communicates with the first subscription device in the bearer network, and determines, based on the identifier of the destination device included in the third subscription request, the second network device that communicates with the destination device in the bearer network. The N paths for implementing communication between the first subscription device and the destination device are computed. Each path in the N paths includes a bearer network path between the first network device and the second network device. The first subscription data is generated, and the first subscription data includes the identifier of each path in the N paths.

In some embodiments, the control device includes the network topology. In this way, the control device determines, based on the identifier of the first subscription device, the identifier of the destination device, and the network topology, the first network device that communicates with the first subscription device and the second network device that communicates with the destination device in the bearer network. For example, the network architecture 100 in FIG. 1 is used as an example. The first subscription device is the subscription device 21 in the network architecture 100, and the destination device is the data center 22 in the network architecture 100. The network device 121 receives the first subscription request sent by the subscription device 21. The first subscription request includes the identifier of the subscription device 21 and the identifier of the data center 22. It is assumed that the network device 121 determines, based on the first subscription request, that the identifiers of the N paths are not cached, and sends the third subscription request to the control device. The third subscription request includes the identifier of the subscription device 21 and the identifier of the data center 22.

For example, the control device receives the third subscription request, determines, based on the identifier of the subscription device 21, that the first network device that communicates with the subscription device 21 is the network device 121, and determines, based on the identifier of the data center 22, that the second network device that communicates with the data center 22 is the network device 123. A plurality of paths for implementing communication between the subscription device 21 and the data center 22 are computed. It is assumed that the plurality of paths includes the foregoing path A, path B, and path C. The first subscription data is generated. The first subscription data includes the identifier IDA of the path A, the identifier IDB of the path B, and the identifier IDC of the path C. That is, the first subscription data includes IDA, IDB, and IDC.

In some embodiments, the first subscription data may further include information such as the performance parameter of each path in the N paths. For example, the network architecture 100 in FIG. 1 is still used as an example. Paths computed by the control device include the path A, the path B, and the path C. Therefore, the first subscription data may further include the performance parameter of the path A, the performance parameter of the path B, and the performance parameter of the path C. For each path in the N paths, the path includes at least one subpath, the identifier of the path includes the identifier of each subpath in the at least one subpath, and the performance parameter of the path is obtained based on the performance parameter of the at least one subpath. For any subpath in the at least one subpath, the control device receives a performance parameter that is of the subpath and that is collected by an endpoint device of the subpath. When the performance parameter of the at least one subpath is received, the performance parameter of the path is obtained based on the performance parameter of the at least one subpath.

In some embodiments, the performance parameter of the path includes the performance parameter of the at least one subpath. In some embodiments, the performance parameter of the subpath includes the parameter such as the latency, and the performance parameter of each subpath in the at least one subpath is accumulated to obtain the performance parameter of the path. In some embodiments, the performance parameter of the subpath includes one or more of parameters such as the packet loss rate and the bandwidth, and one performance parameter is selected from the performance parameter of the at least one subpath as the performance parameter of the path. When the performance parameter of the path includes the performance parameter of the at least one subpath, the path includes the first subpath, the first subpath is connected to the first network device, the path may further include at least one second subpath, and the at least one second subpath is a subpath other than the first subpath in the path. Because the first network device can collect the performance parameter of the first subpath, the performance parameter that is of the path and that is sent by the control device to the first network device may not include the performance parameter of the first subpath. In other words, in the first subscription data, the performance parameter of the path may not include the performance parameter of the first subpath, but includes the performance parameter of the at least one second subpath, so that a data amount of the first subscription data can be reduced, and load of sending data by the control device can be reduced. For example, referring to FIG. 1, for the path A, the path B, and the path C, the path A includes the subpath 31 and the subpath 34, the path B includes the subpath 32 and the subpath 34, and the path C includes the subpath 33. The first subscription data includes the identifier (ID31, ID34) of the path A, the identifier (ID32, ID34) of the path B, and the identifier (ID33) of the path C, that is, the first subscription data includes (ID31, ID34), (ID32, ID34), and (ID33). For the performance parameter of the path A, the performance parameter of the path B, and the performance parameter of the path C, because the subpath 31, the subpath 32, and the subpath 33 are connected to the network device 121, the network device 121 can collect the performance parameter of the subpath 31, the performance parameter of the subpath 32, and the performance parameter of the subpath 33. Therefore, the performance parameter of the path A obtained by the control device includes the performance parameter of the subpath 34, and the performance parameter of the path B includes the performance parameter of the subpath 34. In other words, the first subscription data includes the performance parameter of the subpath 34 in the path A and the performance parameter of the subpath 34 in the path B. The first subscription data may be represented by the following Table 2.

**Table 2**

| Path | Identifier of the path | Performance parameter |
|---|---|---|
| Path A | (ID31, ID34) | Performance parameter of a subpath 34 |
| Path B | (ID32, ID34) | Performance parameter of the subpath 34 |
| Path C | (ID33) | Empty |

It should be noted that, for each subpath in the bearer network and for two endpoint devices connected to the subpath, at least one endpoint device in the two endpoint devices may periodically collect the performance parameter of the subpath, and send the performance parameter of the subpath to the control device.

In some embodiments, for any path in the N paths, a performance parameter that is of a subpath included in the path and that is obtained by the control device may be newly received by the control device.

A bearer network in which the first network device is located and a bearer network in which the second network device is located may be two different bearer networks. For ease of description, the bearer network in which the first network device is located is referred to as a first bearer network, and the bearer network in which the second network device is located is referred to as a second bearer network. In this case, a control device of the first bearer network receives the third subscription request sent by the first network device, and computes the N paths under coordination of a control device of the second bearer network. A bearer network path included in each path in the N paths passes through the first bearer network and the second bearer network. During implementation, the control device of the first bearer network determines, based on the identifier of the destination device, the second bearer network in which the second network device that communicates with the destination device is located; determines a third network device. The third network device is a boundary device that communicates with the second bearer network in the first bearer network; sends a path computation request to the control device of the second bearer network, where the path computation request includes an identifier of the third network device and the identifier of the destination device; and computes a plurality of first bearer network paths, where the plurality of first bearer network paths are bearer network paths between the first network device and the third network device. The control device of the second bearer network receives the path computation request; determines a fourth network device based on the identifier of the third network device included in the path computation request, where the fourth network device is a boundary device that communicates with the third network device in the second bearer network; determines, based on the identifier of the destination device included in the path computation request, the second network device that communicates with the destination device; computes a plurality of second bearer network paths, where the plurality of second bearer network paths are bearer network paths between the fourth network device and the second network device; and sends a path computation response to the control device of the first bearer network. The path computation response includes identifiers of the plurality of second bearer network paths and an identifier of the fourth network device. The control device of the first bearer network receives the path computation response; and computes the N paths based on the identifiers of the plurality of first bearer network paths, the identifiers of the plurality of second bearer network paths, and the identifier of the fourth network device. Each path in the N paths includes one first bearer network path, a third path, and one second bearer network path, and the third path is a path between the third network device and the fourth network device.

In some embodiments, the path computation response further includes a performance parameter of each second bearer network path in the plurality of second bearer network paths. In this way, the control device of the first bearer network further obtains performance parameters of the plurality of first bearer network paths and a performance parameter of the third path, and obtains the performance parameter of each path in the N paths based on the performance parameters of the plurality of first bearer network paths, the performance parameter of the third path, and the performance parameters of the plurality of second bearer network paths. The third network device collects the performance parameter of the third path, and sends the performance parameter of the third path to the control device of the first bearer network. The control device of the first bearer network receives the performance parameter of the third path. The fourth network device collects the performance parameter of the third path, and sends the performance parameter of the third path to the control device of the second bearer network. The control device of the second bearer network receives the performance parameter of the third path, and sends the performance parameter of the third path to the control device of the first bearer network. The control device of the first bearer network receives the performance parameter of the third path.

Step 306: The control device sends a third subscription response to the first network device. The third subscription response includes the first subscription data.

For example, the third subscription request not only requests the control device to compute the N paths, but also requests the control device to subscribe to the N paths for the first network device. Therefore, the control device further correspondingly stores the identifier of the first network device and the identifier of each path in the N paths in the third correspondence, to subscribe to the N paths for the first network device on the control device. For example, for the path A, the path B, and the path C, the control device correspondingly stores the identifier "ID 121" of the network device 121, the identifier (ID31, ID34) of the path A, the identifier (ID32, ID34) of the path C, and the identifier (ID33) of the path C in the third correspondence shown in Table 3.

**Table 3**

| Identifier of a network device | Identifier of a path |
|---|---|
| ID121 | (ID31, ID34), (ID32, ID34), and (ID33) |
| ... | ... |

In some embodiments, the third correspondence is stored on the control device. Alternatively, the third correspondence is stored on a second storage device, and the second storage device and the first storage device may be a same storage device, or may be different storage devices. For any path in the N paths, the path may be subscribed to by a plurality of network devices. Therefore, in the third correspondence, there may be a plurality of identifiers of network device corresponding to the identifier of the path. In some embodiments, a destination address of the third subscription response is the identifier of the first network device, a source address is the identifier of the control device, and a payload includes the first subscription data.

Step 307: The first network device receives the third subscription response, and sends the first subscription response to the first subscription device. The first subscription response includes the first subscription data, and the first subscription data is the first subscription data in the third subscription response.

For example, a destination address of the first subscription response is the identifier of the first subscription device, a source address is the identifier of the first network device, and a payload includes the first subscription data in the third subscription response. In some embodiments, for each path in the N paths, the first subscription data in the third subscription response includes a performance parameter of the path, and the performance parameter of the path includes a performance parameter of at least one second subpath in the path. In this case, the first network device collects a performance parameter of a first subpath included in the path, and forms the performance parameter of the path by using the performance parameter of the at least one second subpath and the performance parameter of the first subpath. In addition, the first subscription data in the first subscription response includes the formed performance parameter of the path. For example, the first network device receives the third subscription response sent by the control device. The third subscription response includes the first subscription data in Table 2. In other words, the first subscription data in the third subscription response includes (ID31, ID34), (ID32, ID34), (ID33), the performance parameter of the subpath 34 in the path A, and the performance parameter of the subpath 34 in the path B. The network device 121 is connected to the subpath 31 in the path A, the subpath 32 in the path B, and the subpath 33 in the path C. Therefore, after receiving the third subscription response, the network device 121 collects the performance parameter of the subpath 31 in the path A, the performance parameter of the subpath 32 in the path B, and the performance parameter of the subpath 33 in the path C. The network device 121 forms the performance parameter of the path A by using the performance parameter of the subpath 31 and the performance parameter of the subpath 34, forms the performance parameter of the path B by using the performance parameter of the subpath 32 and the performance parameter of the subpath 34, and uses the performance parameter of the subpath 33 as the performance parameter of the path C. In this way, for the first subscription response sent by the network device 121 to the subscription device 21, the first subscription data in the first subscription response includes (ID31, ID34), (ID32, ID34), (ID33), the performance parameter of the subpath 31 and the performance parameter of the subpath 34 in the path A, the performance parameter of the subpath 32 and the performance parameter of the subpath 34 in the path B, and the performance parameter of the subpath 33. The first subscription data may be represented by the following Table 4.

**Table 4**

| Path | Identifier of the path | Performance parameter |
|---|---|---|
| Path A | (ID31, ID34) | Performance parameter of a subpath 31 and performance parameter of a subpath 34 |
| Path B | (ID32, ID34) | Performance parameter of a subpath 32 and performance parameter of the subpath 34 |
| Path C | (ID33) | Performance parameter of a subpath 33 |

Step 308: The first subscription device receives the first subscription response, and sends a second subscription request to the first network device. The second subscription request includes an identifier of each path in M paths, the N paths include the M paths, and M is an integer greater than or equal to 1.

In step 308, the first subscription device receives the first subscription response, and selects identifiers of the M paths from the identifiers of the N paths included in the first subscription response.

In some embodiments, when the first subscription response does not include the performance parameter of each path in the N paths, the first subscription device randomly selects the M paths from the N paths or selects M paths that include least subpaths. For each path in the N paths, the identifier of the path includes the identifier of each subpath in the path. The first subscription device separately performs statistics collection on identifiers of subpaths included in each path, to obtain a quantity of subpaths included in each path, and selects, based on the quantity of subpaths included in each path, the M paths that include a minimum quantity of subpaths. In some embodiments, when the first subscription response includes the performance parameter of each path in the N paths, the first subscription device selects the M paths based on the performance parameter of each path. For example, the first subscription device selects, based on the performance parameter of each path, M paths whose performance parameters are optimal, or selects M paths whose performance parameters meet a service requirement. The service requirement is a requirement of a service that needs to be transmitted between the first subscription device and the destination device. For example, the subscription device 21 receives the first subscription response, where the first subscription response includes the first subscription data in Table 4; selects the path A and the path B based on the performance parameter of the path A, the performance parameter of the path B, and the performance parameter of the path C that are included in the first subscription data in Table 4; and sends the second subscription request to the network device 121. The second subscription request includes the identifier (ID31, ID34) of the path A and the identifier (ID32, ID34) of the path B. In some embodiments, M is less than or equal to a maximum quantity of paths supported by the first subscription device. For example, M is equal to the maximum quantity of paths supported by the first subscription device.

Step 309: The first network device receives the second subscription request, and correspondingly stores the identifier of the first subscription device and the identifiers of the M paths in a fourth correspondence, to subscribe to the M paths for the first subscription device on the first network device.

An example is used for description. There may be a plurality of subscription devices that communicate with the first network device, and for any path in the M paths, there may be a plurality of subscription devices that subscribe to the path, that is, there are a plurality of identifiers of subscription devices corresponding to the identifier of the path in the fourth correspondence. The fourth correspondence may be locally stored on the first network device. Alternatively, the fourth correspondence may be stored on the first storage device. In some embodiments, when the first subscription request further includes the performance parameter type, the first network device correspondingly stores the identifier of the first subscription device, the identifiers of the M paths, and the performance parameter type in the fourth correspondence. For example, the network device 121 receives the second subscription request sent by the subscription device 21, where the second subscription request includes the identifier (ID31, ID34) of the path A and the identifier (ID32, ID34) of the path B; and correspondingly stores the identifier "ID21" of the subscription device 21, the identifier (ID31, ID34) of the path A, and the identifier (ID32, ID34) of the path B in the fourth correspondence in Table 5.

**Table 5**

| Identifier of a subscription device | Identifier of a path |
|---|---|
| ID21 | (ID31, ID34) and (ID32, ID34) |
| ... | ... |

In some embodiments, the first network device further sends a second subscription response to the first subscription device. The first network device further obtains the performance parameter of each path in the M paths, and the second subscription response further includes the performance parameter of each path in the M paths.

After the first network device subscribes to the M paths for the first subscription device, the first network device may periodically push performance parameters of one or more paths in the M paths to the first subscription device. A detailed implementation process is as follows:

Step 310: The first network device periodically obtains the performance parameter of each path in the M paths, and sends subscription data to the first subscription device based on the fourth correspondence. The subscription data includes performance parameters of some or all of the M paths.

In some embodiments, the first network device periodically obtains the performance parameter of each path in the M paths, and periodically sends second subscription data to the first subscription device. The second subscription data includes the identifier and the performance parameter of each path in the M paths.

In some embodiments, the first network device obtains the performance parameter of each path by using the following operations 3101 to 3104, and sends the second subscription data to the first subscription device. The operations 3101 to 3104 are as follows:

3101: For any path in the M paths, the first network device periodically collects the performance parameter of the first subpath. The first subpath is a subpath connected to the first network device in the path.

For example, the first network device further sends the identifier and the performance parameter of the first subpath to the control device. For example, the foregoing path A is used as an example. The path A includes the subpath 31 and the subpath 34. The network device 121 periodically collects the performance parameter of the subpath 31, and sends the identifier "ID31" and the performance parameter of the subpath 31 to the control device.

3102: The first network device receives the performance parameter of the at least one second subpath sent by the control device. The at least one second subpath is a subpath in the path other than the first subpath, to obtain the performance parameter of each subpath included in the path.

For any second subpath in the at least one second subpath, an endpoint device connected to the second subpath periodically collects the performance parameter of the second subpath, and sends the identifier and the performance parameter of the second subpath to the control device. The control device receives the identifier and the performance parameter of the second subpath. A record including the identifier of the second subpath is obtained from the third correspondence stored on the control device or the third correspondence stored on the second storage device. An identifier of a network device stored in the record includes the identifier of the first network device. The performance parameter of the second subpath is sent to each network device based on an identifier of each network device included in the record. The first network device receives the performance parameter of the second subpath. In the same manner, the first network device further receives a performance parameter of another second subpath in the at least one second subpath, to obtain a performance parameter of each subpath included in the path. For example, for the subpath 34 in the path A, an endpoint device of the subpath 34 includes a network device 122 and a network device 123. The network device 122 and/or the network device 123 periodically collect the performance parameter of the subpath 34, and send the identifier "ID34" and the performance parameter of the subpath 34 to a control device 11. The control device 11 obtains, from the third correspondence in Table 3, a record including the identifier "ID34" of the subpath 34. An identifier of a network device stored in the record includes an identifier "ID121" of the network device 121. The performance parameter of the subpath 34 is sent to the network device 121 based on the identifier "ID121" of the network device 121. The network device 121 receives the performance parameter of the subpath 34, to obtain the performance parameter of the subpath 31 included in the path A and the performance parameter of the subpath 34 included in the path A.

3103: The first network device obtains the performance parameter of the path based on the performance parameter of each subpath included in the path.

For a detailed implementation process in which the first network device obtains the performance parameter of the path based on the performance parameter of each subpath included in the path, refer to related content in step 303. Details are not described herein again.

The first network device may obtain performance parameters of the M paths by repeating the foregoing processes 3101 to 3103. For example, for the path B, the foregoing processes 3101 to 3103 are repeated to obtain the performance parameter of the path B.

3104: The first network device sends the second subscription data to the first subscription device based on the fourth correspondence. The second subscription data includes the identifier and the performance parameter of each path in the M paths.

For each path in the M paths, the second network device obtains, based on the identifier of each path and from the fourth correspondence stored on the first network device or the fourth correspondence stored on the first storage device, an identifier of each subscription device that subscribes to the path. The obtained identifier of the subscription device includes the identifier of the first subscription device. The second subscription data is sent to each subscription device based on the obtained identifier of each subscription device. The second subscription data includes the performance parameter of each path in the M paths. For example, for the path A and the path B, the network device 121 obtains, based on the identifier (ID31, ID34) of the path A and the identifier (ID32, ID34) of the path B and from the fourth correspondence in Table 5, the identifier of each subscription device that subscribes to the path. The obtained identifier of the subscription device includes the identifier "ID21" of the subscription device 21. The second subscription data is sent to the subscription device 21 based on the identifier "ID21" of the subscription device 21. The second subscription data includes the performance parameter of the path A and the performance parameter of the path B.

In some embodiments, for each path in the M paths, the performance parameter of the path includes one or more parameters of latency, a packet loss rate, bandwidth, and the like, and the record obtained by the first network device from the fourth correspondence further includes a performance parameter type subscribed by the first subscription device. In this way, for the performance parameter of each path in the second subscription data sent by the first network device to the first subscription device, the performance parameter of each path is a performance parameter corresponding to the performance parameter type. The first subscription device receives the second subscription data, selects, based on the performance parameters of the M paths included in the second subscription data, a path that meets the service requirement, and communicates with the destination device through the selected path.

In some embodiments, the first network device obtains the performance parameter of each path in the M paths, and sends third subscription data to the first subscription device after a performance parameter of an i^{th} path in the M paths exceeds a threshold. The third subscription data includes the performance parameter of the i^{th} path, and i=1, 2, ..., and M.

For ease of description, any path in the M paths is referred to as the i^{th} path. The first network device obtains a performance parameter of a subpath included in the i^{th} path, and obtains the performance parameter of the i^{th} path based on the performance parameter of the subpath included in the i^{th} path. The third subscription data is sent to the first subscription device after the performance parameter of the i^{th} path in the M paths exceeds the threshold. The third subscription data includes the performance parameter of the i^{th} path.

For a detailed implementation process in which the first network device obtains the performance parameter of the path based on the performance parameter of the subpath included in the path, refer to related content in step 303. Details are not described herein again.

For a detailed implementation process in which the first network device obtains the performance parameter of the i^{th} path, refer to the foregoing operations 3101 to 3103. Details are not described herein again.

The first subscription device receives the third subscription data, selects, based on the performance parameter of the i^{th} path included in the second subscription data, the path that meets the service requirement, and communicates with the destination device through the selected path.

In some embodiments, a protocol used between the first subscription device, the first network device, and the control device includes a message queuing telemetry transport (message queuing telemetry transport, MQTT) protocol or a google remote procedure call (google remote procedure call, GRPC) protocol.

In this embodiment of this application, the first subscription device sends the first subscription request to the first network device. The first subscription request includes the identifier of the first subscription device and the identifier of the destination device. When the identifiers of the N paths for implementing communication between the first subscription device and the destination device are not cached, the first network device sends the second subscription request to the control device. The second subscription request includes the identifier of the first subscription device and the identifier of the destination device. The control device computes the N paths for implementing communication between the first subscription device and the destination device, and sends the third subscription response to the first network device, where the third subscription response includes the first subscription data, and the first subscription data includes the identifiers of the N paths, and further records the performance parameters of the first network device and the N paths. The first network device receives the first subscription response, and sends the first subscription response to the first subscription device, where the first subscription response includes the first subscription data, so that the first subscription device selects the M paths from the N paths based on the first subscription data, and sends the second subscription request to the first network device, where the second subscription request includes the identifiers of the M paths. The first network device records a subscription relationship between the first subscription device and the M paths based on the second subscription request. In this way, the control device may send the performance parameters of the N paths to each network device that subscribes to the N paths, and then the first network device sends the performance parameters of the M paths to each subscription device that subscribes to the M paths. In this way, the first subscription device periodically receives the performance parameters of the M paths, and selects, based on the performance parameters of the M paths, the path that meets the service requirement. Because the first subscription device selects a path, flexibility of path planning is improved, and load of the control device is reduced. In addition, when the first network device determines that the identifiers of the N paths are cached, the first network device sends the second subscription request to the control device. In this way, the control device does not need to compute the N paths, so that flexibility of path planning is significantly improved and the load of the control device is reduced. Furthermore, when sending the performance parameter of the path, the control device only needs to send the performance parameter of the path to a network device that subscribes to the path, and then each network device sends the performance parameter of the path to the subscription device that subscribes to the path. Therefore, the control device does not need to send the performance parameter of the path to all subscription devices that subscribe to the path. This significantly reduces a quantity of performance parameters that need to be replicated and distributed by the control device, and significantly reduces the load of the control device. Because the control device does not need to directly push the performance parameter of the path to the subscription device, the control device does not need to be exposed to the subscription device, and a risk of being attacked is reduced.

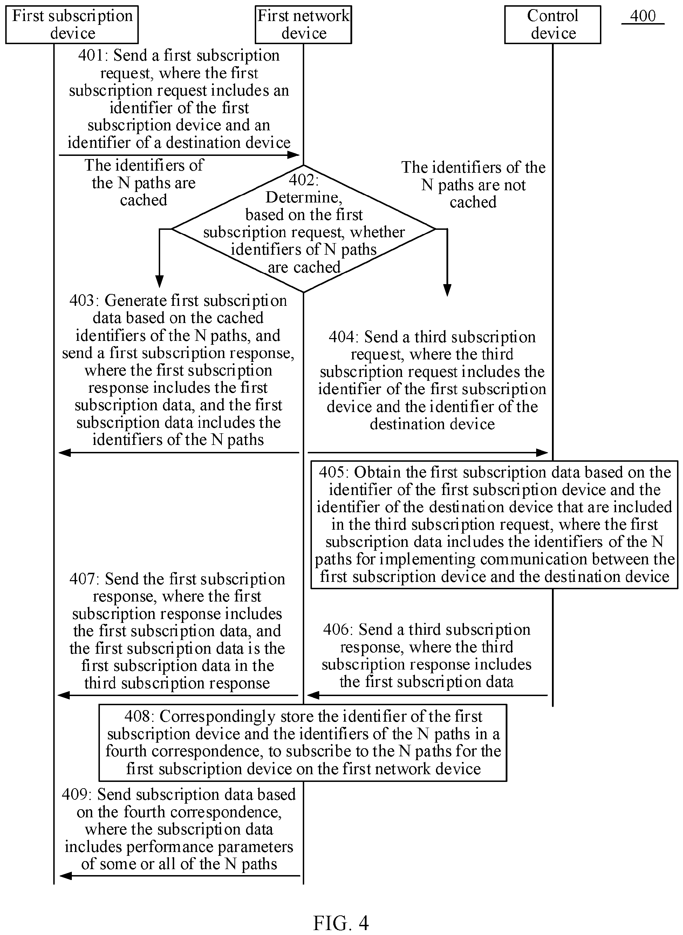

Referring to FIG. 4, an embodiment of this application provides a path subscription method 400. The method 400 is applied to the network architecture 100 in FIG. 1 or FIG. 2, and includes the following steps.

Step 401: This step is the same as step 301 in the method 300 in FIG. 3. Details are not described herein again.

Step 402: A first network device receives a first subscription request, and determines, based on the first subscription request, whether identifiers of N paths are cached; and if the identifiers of the N paths are cached, performs step 403; or if the identifiers of the N paths are not cached, performs step 404. N is an integer greater than 1.

For a detailed implementation process in which the first network device determines whether the identifiers of the N paths are cached, refer to related content in step 302 in the method 300 in FIG. 3. Details are not described herein again.

Step 403: The first network device generates first subscription data based on the cached identifiers of the N paths, and sends a first subscription response to a first subscription device. The first subscription response includes the first subscription data, the first subscription data includes an identifier of each path in the N paths, and step 308 is performed.

For a detailed implementation process in which the first network device generates the first subscription data, refer to related content in step 303 in the method 300 in FIG. 3. Details are not described herein again.

Step 404 to step 407 are the same as step 304 to step 307 in the method 300 in FIG. 3. Details are not described herein again.

Step 408: The first network device correspondingly stores an identifier of the first subscription device and the identifiers of the N paths in the fourth correspondence, to subscribe to the N paths for the first subscription device on the first network device.

There may be a plurality of subscription devices that communicate with the first network device, and for any path in the N paths, there may be a plurality of subscription devices that subscribe to the path, that is, there are a plurality of identifiers of subscription devices corresponding to the identifier of the path in the fourth correspondence. After the first network device subscribes to the N paths for the first subscription device, the first network device may periodically push performance parameters of one or more paths in the N paths to the first subscription device. A detailed implementation process is as follows:

Step 409: The first network device periodically obtains the performance parameter of each path in the N paths, and sends subscription data to the first subscription device based on the fourth correspondence. The subscription data includes performance parameters of some or all of the N paths.

In some embodiments, the first network device periodically obtains the performance parameter of each path in the N paths, and periodically sends fourth subscription data to the first subscription device. The fourth subscription data includes the identifier and the performance parameter of each path in the N paths. For a detailed implementation process in which the first network device obtains the performance parameter of each path in the N paths, refer to related content in step 310 in the method 300 in FIG. 3. Details are not described herein again. The first subscription device receives the fourth subscription data; selects a path based on the performance parameters of the N paths included in the fourth subscription data; and communicates with the destination device through the selected path. In some embodiments, the first network device obtains the performance parameter of each path in the N paths, and sends fifth subscription data to the first subscription device after a performance parameter of a j^{th} path in the N paths exceeds a threshold. The fifth subscription data includes the performance parameter of the j^{th} path, and j=1, 2, ..., and N. The first subscription device receives the fifth subscription data; selects a path based on the performance parameter of the i^{th} path included in the fifth subscription data; and communicates with the destination device through the selected path.

In this embodiment of this application, the first subscription device sends the first subscription request to the first network device. The first subscription request includes the identifier of the first subscription device and an identifier of the destination device. When the identifiers of the N paths for implementing communication between the first subscription device and the destination device are not cached, the first network device sends a second subscription request to a control device. The second subscription request includes the identifier of the first subscription device and the identifier of the destination device. The control device computes the N paths for implementing communication between the first subscription device and the destination device; sends a third subscription response to the first network device, where the third subscription response includes the first subscription data, and the first subscription data includes the identifiers of the N paths; and further records performance parameters of the first network device and the N paths. The first network device receives the first subscription response, and records a subscription relationship between the first subscription device and the N paths based on the first subscription response. In this way, the control device may send the performance parameters of the N paths to each network device that subscribes to the N paths, and then the first network device sends the performance parameters of the N paths to each subscription device that subscribes to the N paths. In this way, the first subscription device periodically receives performance parameters of the M paths, and selects, based on the performance parameters of the M paths, a path that meets a service requirement. Because the first subscription device selects a path, flexibility of path planning is improved, and load of the control device is reduced. In addition, when the first network device determines that the identifiers of the N paths are cached, the first network device sends the second subscription request to the control device. In this way, the control device does not need to compute the N paths, so that flexibility of path planning is significantly improved and the load of the control device is reduced. In addition, when sending the performance parameter of the path, the control device only needs to send the performance parameter of the path to a network device that subscribes to the path, and then each network device sends the performance parameter of the path to the subscription device that subscribes to the path. Therefore, the control device does not need to send the performance parameter of the path to all subscription devices that subscribe to the path. This significantly reduces a quantity of performance parameters that need to be replicated and distributed by the control device, and significantly reduces the load of the control device.

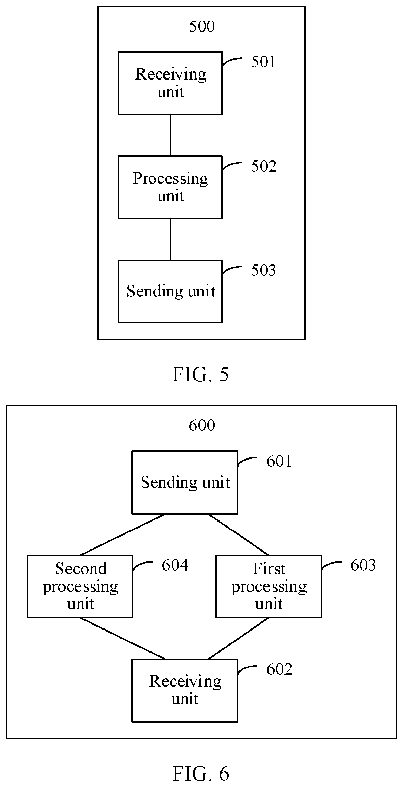

Referring to FIG. 5, an embodiment of this application provides a path subscription apparatus 500. The apparatus 500 is deployed on the network device in any one of the foregoing embodiments, for example, deployed on the first network device in the method 300 in FIG. 3 or the method 400 in FIG. 4, and includes a receiving unit 501, a processing unit 502, and a sending unit 503. The receiving unit 501 is configured to receive a first subscription request sent by a first subscription device. The first subscription request includes an identifier of the first subscription device and an identifier of a destination device. The processing unit 502 is configured to obtain first subscription data based on the identifier of the first subscription device and the identifier of the destination device. The first subscription data includes an identifier of each path in N paths, N is greater than 1, and any path in the N paths is used to implement communication between the first subscription device and the destination device. The sending unit 503 is configured to send a first subscription response to the first subscription device. The first subscription response includes the first subscription data.

For example, for a detailed implementation process in which the receiving unit 501 receives the first subscription request, refer to related content in step 302 in the method 300 in FIG. 3 and step 402 in the method 400 in FIG. 4. Details are not described herein again. For a detailed implementation process in which the processing unit 502 obtains the first subscription data, refer to related content in steps 303 to 306 in the method 300 in FIG. 3 and steps 403 to 406 in the method 400 in FIG. 4. Details are not described herein again. For a detailed implementation process in which the sending unit 503 sends the first subscription response, refer to related content in step 307 in the method 300 in FIG. 3 and step 407 in the method 400 in FIG. 4. Details are not described herein again.

Optionally, the receiving unit 501 is further configured to receive a second subscription request sent by the first subscription device. The second subscription request includes an identifier of each path in M paths, M is greater than or equal to 1, and the M paths are included in the N paths. The processing unit 502 is further configured to obtain a performance parameter of each path in the M paths. The sending unit 503 is further configured to send a second subscription response to the first subscription device. The second subscription response includes the performance parameter of each path in the M paths. For a detailed implementation process in which the receiving unit 501 receives the second subscription request, refer to related content in step 309 in the method 300 in FIG. 3. Details are not described herein again. For a detailed implementation process in which the processing unit 502 obtains the performance parameter of each path, refer to related content in step 309 in the method 300 in FIG. 3. Details are not described herein again.

For a detailed implementation process in which the sending unit 503 sends the second subscription response, refer to related content in step 309 in the method 300 in FIG. 3. Details are not described herein again.

In a possible implementation, the first subscription data further includes a performance parameter of each path in the N paths.

Optionally, the receiving unit 501 is further configured to receive the second subscription request sent by the first subscription device. The second subscription request includes the identifier of each path in M paths, M is greater than or equal to 1, and the M paths are paths whose performance parameters meet a service requirement in the N paths. For a detailed implementation process in which the receiving unit 501 receives a third subscription request, refer to related content in step 309 in the method 300 in FIG. 3. Details are not described herein again.

Optionally, the processing unit 502 is further configured to periodically obtain the performance parameter of each path in the M paths. The sending unit 503 is further configured to periodically send second subscription data to the first subscription device. The second subscription data includes the identifier and the performance parameter of each path in the M paths. For a detailed implementation process in which the processing unit 502 periodically obtains the performance parameter of each path in the M paths, refer to related content in step 310 in the method 300 in FIG. 3. Details are not described herein again. For a detailed implementation process in which the sending unit 503 periodically sends the second subscription data to the first subscription device, refer to related content in step 310 in the method 300 in FIG. 3. Details are not described herein again.

Optionally, the processing unit 502 is further configured to obtain the performance parameter of each path in the M paths. The sending unit 503 is further configured to send third subscription data to the first subscription device after a performance parameter of an i^{th} path in the M paths exceeds a threshold. The third subscription data includes the performance parameter of the i^{th} path. For a detailed implementation process in which the processing unit 502 periodically obtains the performance parameter of each path in the M paths, refer to related content in step 310 in the method 300 in FIG. 3. Details are not described herein again. For a detailed implementation process in which the sending unit 503 periodically sends the third subscription data to the first subscription device, refer to related content in step 310 in the method 300 in FIG. 3. Details are not described herein again.

Optionally, the processing unit 502 is further configured to periodically obtain the performance parameter of each path in the N paths. The sending unit 503 is further configured to periodically send fourth subscription data to the first subscription device. The fourth subscription data includes the identifier and the performance parameter of each path in the N paths. For a detailed implementation process in which the processing unit 502 periodically obtains the performance parameter of each path in the N paths, refer to related content in step 409 in the method 400 in FIG. 4. Details are not described herein again. For a detailed implementation process in which the sending unit 503 periodically sends the fourth subscription data to the first subscription device, refer to related content in step 409 in the method 400 in FIG. 4. Details are not described herein again.

Optionally, the processing unit 502 is further configured to obtain the performance parameter of each path in the N paths. The sending unit 503 is further configured to send fifth subscription data to the first subscription device after a performance parameter of a j^{th} path in the N paths exceeds a threshold. The fifth subscription data includes the performance parameter of the j^{th} path. For a detailed implementation process in which the processing unit 502 periodically obtains the performance parameter of each path in the N paths, refer to related content in step 409 in the method 400 in FIG. 4. Details are not described herein again. For a detailed implementation process in which the sending unit 503 periodically sends the fifth subscription data to the first subscription device, refer to related content in step 409 in the method 400 in FIG. 4. Details are not described herein again.

Optionally, the sending unit 503 is further configured to send the third subscription request to a control device. The third subscription request includes the identifier of the first subscription device and the identifier of the destination device; and the receiving unit 501 is further configured to receive a third subscription response sent by the control device. The third subscription response includes the first subscription data.

Optionally, the processing unit 502 is configured to obtain the first subscription data based on the cached identifier of each path in the N paths. For a detailed implementation process in which the processing unit 502 obtains the first subscription data, refer to related content in step 303 in the method 300 in FIG. 3. Details are not described herein again.

In this embodiment of this application, the apparatus is a device that communicates with the first subscription device in a network. After the receiving unit receives the first subscription request, the processing unit obtains identifiers of N paths that implement communication between the first subscription device and the destination device, and the sending unit sends the first subscription data to the first subscription device. The first subscription data includes the identifiers of the N paths, and the first subscription device may select a path based on the first subscription data. In this way, for each subscription device that communicates with the apparatus, the processing unit is responsible for obtaining identifiers of a plurality of paths for the subscription devices, and then each subscription device selects a path used to communicate with a destination device in the plurality of paths. Compared with a current situation in which the control device centrally determines the path for all subscription devices in the network, this improves flexibility of path planning, and reduces load of the control device.

Referring to FIG. 6, an embodiment of this application provides a path subscription apparatus 600. The apparatus 600 is deployed on a subscription device in any one of the foregoing embodiments, for example, deployed on the first subscription device in the method 300 in FIG. 3 or the method 400 in FIG. 4, and includes a sending unit 601 and a receiving unit 602. The sending unit 601 is configured to send a first subscription request to a first network device. The first subscription request includes an identifier of the apparatus 600 and an identifier of a destination device. The receiving unit 602 is configured to receive a first subscription response sent by the first network device. The first subscription response includes first subscription data, the first subscription data includes an identifier of each path in N paths, N is greater than 1, and any path in the N paths is used to implement communication between the apparatus 600 and the destination device. For a detailed implementation process in which the sending unit 601 sends the first subscription request, refer to related content in step 301 in the method 300 in FIG. 3 or step 401 in the method 400 in FIG. 4. Details are not described herein again. For a detailed implementation process in which the receiving unit 602 receives the first subscription response, refer to related content in step 308 in the method 300 in FIG. 3 or step 407 in the method 400 in FIG. 4. Details are not described herein again.

Optionally, the apparatus 600 further includes a first processing unit 603. The first processing unit 603 is configured to select M paths from the N paths. M is greater than or equal to 1. The sending unit 601 is further configured to send a second subscription request to the first network device. The second subscription request includes an identifier of each path in the M paths. The receiving unit 602 is further configured to receive a second subscription response sent by the first network device. The second subscription response includes a performance parameter of each path in the M paths. For a detailed implementation process in which the first processing unit 603 selects the M paths, refer to related content in step 308 in the method 300 in FIG. 3. Details are not described herein again. For a detailed implementation process in which the sending unit 601 sends the second subscription request, refer to related content in step 308 in the method 300 in FIG. 3. Details are not described herein again. For a detailed implementation process in which the receiving unit 602 receives the second subscription response, refer to related content in step 308 in the method 300 in FIG. 3. Details are not described herein again.

Optionally, the first subscription data further includes a performance parameter of each path in the N paths, and the apparatus 600 further includes a second processing unit 604. The second processing unit 604 is configured to select, from the N paths, M paths whose performance parameters meet a service requirement. M is greater than or equal to 1. The sending unit 601 is further configured to send the second subscription request to the first network device. The second subscription request includes the identifier of each path in the M paths. For a detailed implementation process in which the second processing unit 604 selects the M paths whose performance parameters meet the service requirement, refer to related content in step 308 in the method 300 in FIG. 3. Details are not described herein again. For a detailed implementation process in which the sending unit 601 sends a third subscription request, refer to related content in step 308 in the method 300 in FIG. 3. Details are not described herein again.

Optionally, the receiving unit 602 is further configured to receive second subscription data periodically sent by the first network device. The second subscription data includes the identifier and the performance parameter of each path in the M paths. For a detailed implementation process in which the receiving unit 602 receives the second subscription data, refer to related content in step 310 in the method 300 in FIG. 3. Details are not described herein again.

Optionally, the receiving unit 602 is further configured to receive third subscription data sent by the first network device. The third subscription data includes a performance parameter of an i^{th} path in the M paths, and the performance parameter of the i^{th} path exceeds a threshold. For a detailed implementation process in which the receiving unit 602 receives the third subscription data, refer to related content in step 310 in the method 300 in FIG. 3. Details are not described herein again.

Optionally, the receiving unit 602 is further configured to receive fourth subscription data periodically sent by the first network device. The fourth subscription data includes the identifier and a performance parameter of each path in the N paths. For a detailed implementation process in which the receiving unit 602 receives the fourth subscription data, refer to related content in step 409 in the method 400 in FIG. 4. Details are not described herein again.

Optionally, the receiving unit 602 is further configured to receive fifth subscription data sent by the first network device. The fifth subscription data includes a performance parameter of a j^{th} path in the N paths, and the performance parameter of the j^{th} path exceeds a threshold. For a detailed implementation process in which the receiving unit 602 receives the fifth subscription data, refer to related content in step 409 in the method 400 in FIG. 4. Details are not described herein again.

In this embodiment of this application, the first network device is a device that communicates with the apparatus in the network. The sending unit sends the first subscription request to the first network device, to request the first network device to obtain the identifiers of the N paths for implementing communication between the apparatus and the destination device. Then, the apparatus selects a path based on the first subscription data. In this way, for the apparatus that communicates with the first network device, the first network device is responsible for obtaining identifiers of a plurality of paths for the apparatus, and then the apparatus selects a path used to communicate with the destination device in the plurality of paths. Compared with a current situation in which a control device centrally determines a path for all subscription devices in a network, this improves flexibility of path planning and reduces load of the control device.

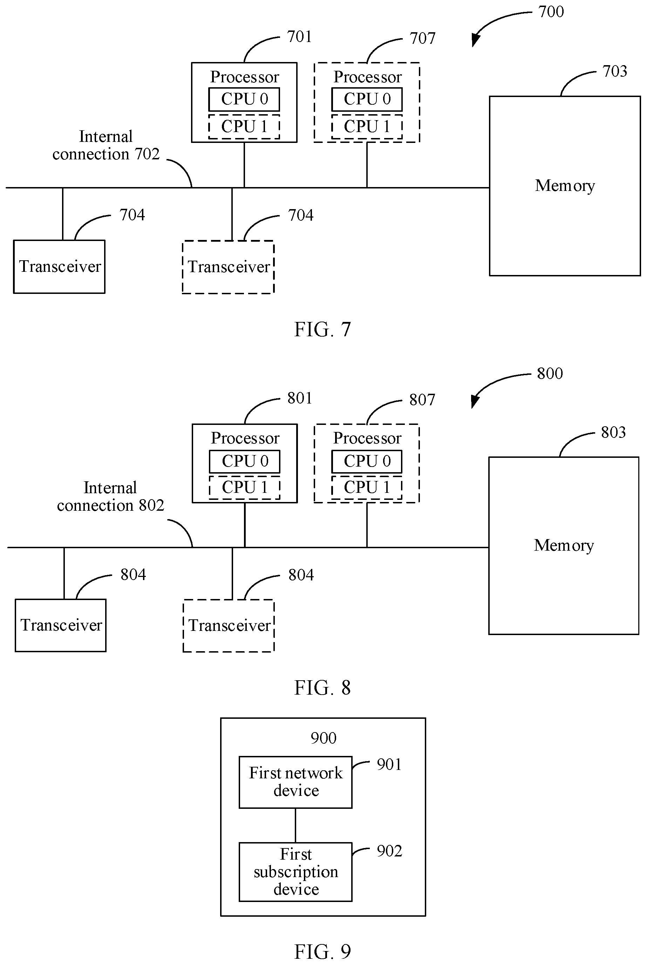

Referring to FIG. 7, an embodiment of this application provides a schematic diagram of a path subscription apparatus 700. The apparatus 700 may be the network device provided in any one of the foregoing embodiments. For example, the apparatus 700 may be the network device in the network architecture 100 in FIG. 1 or FIG. 2, the first network device in the method 300 in FIG. 3 or the method 400 in FIG. 4. The apparatus 700 includes at least one processor 701, an internal connection 702, a memory 703, and at least one transceiver 704. The apparatus 700 is an apparatus of a hardware structure, and may be configured to implement function modules in the apparatus 500 in FIG. 5. For example, a person skilled in the art may figure out that the processing unit 502 in the apparatus 500 in FIG. 5 may be implemented by the at least one processor 701 by invoking code in the memory 703, and the receiving unit 501 and the sending unit 503 in the apparatus 500 in FIG. 5 may be implemented by the transceiver 704. The apparatus 700 may be further configured to implement a function of the first network device in any one of the foregoing embodiments. The processor 701 may be a general-purpose central processing unit (central processing unit, CPU), a network processor (network processor, NP), a microprocessor, an application-specific integrated circuit (application-specific integrated circuit, ASIC), or one or more integrated circuits for controlling program execution of the solutions of this application. The internal connection 702 may include a path for transmitting information between the foregoing components. The internal connection 702 may be a board, a bus, or the like. The at least one transceiver 704 is configured to communicate with another device or a communication network. The memory 703 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray optical disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through the bus. The memory may alternatively be integrated with the processor. The memory 703 is configured to store application program code that executes the solutions in this application, and the processor 701 controls execution. The processor 701 is configured to execute the application program code stored in the memory 703, and cooperate with the at least one transceiver 704, so that the apparatus 700 implements functions in the method in this patent. During specific implementation, in an embodiment, the processor 701 may include one or more CPUs, for example, a CPU 0 and a CPU 1 in FIG. 7. During specific implementation, in an embodiment, the apparatus 700 may include a plurality of processors, for example, the processor 701 and a processor 707 in FIG. 7. Each of the processors may be a single-core (single-CPU) processor, or may be a multi-core (multi-CPU) processor. The processor herein may be one or more devices, circuits, and/or processing cores configured to process data (for example, computer program instructions).

Referring to FIG. 8, an embodiment of this application provides a schematic diagram of a path subscription apparatus 800. The apparatus 800 may be the subscription device provided in any one of the foregoing embodiments. For example, the apparatus 800 may be the subscription device in the network architecture 100 in FIG. 1 or FIG. 2, the first subscription device in the method 300 in FIG. 3 or the method 400 in FIG. 4. The apparatus 800 includes at least one processor 801, an internal connection 802, a memory 803, and at least one transceiver 804. The apparatus 800 is an apparatus of a hardware structure, and may be configured to implement function modules in the apparatus 500 in FIG. 5. For example, a person skilled in the art may figure out that the first processing unit 603 and the second processing unit 604 in the apparatus 600 in FIG. 6 may be implemented by the at least one processor 801 by invoking code in the memory 803, and the sending unit 601 and the receiving unit 602 in the apparatus 600 in FIG. 6 may be implemented by the transceiver 804. The apparatus 800 may be further configured to implement a function of the first subscription device in any one of the foregoing embodiments. The processor 801 may be a general-purpose central processing unit (central processing unit, CPU), a network processor (network processor, NP), a microprocessor, an application-specific integrated circuit (application-specific integrated circuit, ASIC), or one or more integrated circuits for controlling program execution of the solutions of this application. The internal connection 802 may include a path for transmitting information between the foregoing components. The internal connection 802 may be a board, a bus, or the like. The at least one transceiver 804 is configured to communicate with another device or a communication network. The memory 803 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, or the like), a magnetic disk storage medium or another magnetic storage device, or any other medium that can carry or store expected program code in a form of instructions or a data structure and that can be accessed by a computer, but is not limited thereto. The memory may exist independently, and is connected to the processor through the bus. The memory may alternatively be integrated with the processor. The memory 803 is configured to store application program code that executes the solution in this application, and the processor 801 controls execution. The processor 801 is configured to execute the application program code stored in the memory 803, and cooperate with the at least one transceiver 804, so that the apparatus 800 implements functions in the method in this patent. During specific implementation, in an embodiment, the processor 801 may include one or more CPUs, for example, a CPU 0 and a CPU 1 in FIG. 8. During specific implementation, in an embodiment, the apparatus 800 may include a plurality of processors, for example, the processor 801 and a processor 807 in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

Referring to FIG. 9, an embodiment of this application provides a path subscription system 900. The system 900 includes the apparatus 500 in FIG. 5 and the apparatus 600 in FIG. 6, or the system 900 includes the apparatus 700 in FIG. 7 and the apparatus 800 in FIG. 8. The apparatus 500 in FIG. 5 or the apparatus 700 in FIG. 7 may be a first network device 901, and the apparatus 600 in FIG. 6 or the apparatus 800 in FIG. 8 may be a first subscription device 902.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

In this application, the terms "first", "second", and the like are used to distinguish between same or similar items whose effects and functions are basically the same. It should be understood that there is no logical or time-sequence dependency among "first", "second", and "n^{th}", and a quantity and an execution sequence are not limited. It should also be understood that although the terms such as "first" and "second" are used in the following description to describe various elements, these elements should not be limited by the terms. These terms are merely used to distinguish one element from another element. For example, without departing from the scope of the various examples, a first image may be referred to as a second image, and similarly, a second image may be referred to as a first image. Both the first image and the second image may be images, and in some cases, may be separate and different images.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

The foregoing descriptions are only optional embodiments of this application, but are not intended to limit this application. Any modification, equivalent replacement, or improvement made within the principle of this application should fall within the protection scope of this application.

## Claims

1. A path subscription method, wherein the method comprises:
receiving, by a first network device, a first subscription request sent by a first subscription device, wherein the first subscription request comprises an identifier of the first subscription device and an identifier of a destination device;
obtaining, by the first network device, first subscription data based on the identifier of the first subscription device and the identifier of the destination device, wherein the first subscription data comprises an identifier of each path in N paths, N is greater than 1, and any path in the N paths is used to implement communication between the first subscription device and the destination device; and
sending, by the first network device, a first subscription response to the first subscription device, wherein the first subscription response comprises the first subscription data.

2. The method according to claim 1, wherein the method further comprises:
receiving, by the first network device, a second subscription request sent by the first subscription device, wherein the second subscription request comprises an identifier of each path in M paths, M is greater than or equal to 1, and the M paths are comprised in the N paths;
obtaining, by the first network device, a performance parameter of each path in the M paths; and
sending, by the first network device, a second subscription response to the first subscription device, wherein the second subscription response comprises the performance parameter of each path in the M paths.

3. The method according to claim 1, wherein the first subscription data further comprises a performance parameter of each path in the N paths.

4. The method according to claim 3, wherein the method further comprises:
receiving, by the first network device, a second subscription request sent by the first subscription device, wherein the second subscription request comprises an identifier of each path in M paths, M is greater than or equal to 1, and the M paths are paths whose performance parameters meet a service requirement in the N paths.

5. The method according to any one of claims 2 to 4, wherein the method further comprises:
periodically obtaining, by the first network device, the performance parameter of each path in the M paths; and
periodically sending, by the first network device, second subscription data to the first subscription device, wherein the second subscription data comprises the identifier and the performance parameter of each path in the M paths.

6. The method according to any one of claims 2 to 4, wherein the method further comprises:
obtaining, by the first network device, the performance parameter of each path in the M paths; and
sending, by the first network device, third subscription data to the first subscription device after a performance parameter of an i^{th} path in the M paths exceeds a threshold, wherein the third subscription data comprises the performance parameter of the i^{th} path.

7. The method according to claim 3, wherein the method further comprises:
periodically obtaining, by the first network device, the performance parameter of each path in the N paths; and
periodically sending, by the first network device, fourth subscription data to the first subscription device, wherein the fourth subscription data comprises the identifier and the performance parameter of each path in the N paths.

8. The method according to claim 3, wherein the method further comprises:
obtaining, by the first network device, the performance parameter of each path in the N paths; and
sending, by the first network device, fifth subscription data to the first subscription device after a performance parameter of a j^{th} path in the N paths exceeds a threshold, wherein the fifth subscription data comprises the performance parameter of the j^{th} path.

9. The method according to any one of claims 1 to 8, wherein the obtaining, by the first network device, first subscription data based on the identifier of the first subscription device and the identifier of the destination device comprises:
sending, by the first network device, a third subscription request to a control device, wherein the third subscription request comprises the identifier of the first subscription device and the identifier of the destination device; and
receiving, by the first network device, a third subscription response sent by the control device, wherein the third subscription response comprises the first subscription data.

10. The method according to any one of claims 1 to 8, wherein the obtaining, by the first network device, first subscription data based on the identifier of the first subscription device and the identifier of the destination device comprises:
obtaining, by the first network device, the first subscription data based on the cached identifier of each path in the N paths.

11. A path subscription method, wherein the method comprises:
sending, by a first subscription device, a first subscription request to a first network device, wherein the first subscription request comprises an identifier of the first subscription device and an identifier of a destination device; and
receiving, by the first subscription device, a first subscription response sent by the first network device, wherein the first subscription response comprises first subscription data, the first subscription data comprises an identifier of each path in N paths, N is greater than 1, and any path in the N paths is used to implement communication between the first subscription device and the destination device.

12. The method according to claim 11, wherein the method further comprises:
selecting, by the first subscription device, M paths from the N paths, wherein M is greater than or equal to 1;
sending, by the first subscription device, a second subscription request to the first network device, wherein the second subscription request comprises an identifier of each path in the M paths; and
receiving, by the first subscription device, a second subscription response sent by the first network device, wherein the second subscription response comprises a performance parameter of each path in the M paths.

13. The method according to claim 11, wherein the first subscription data further comprises a performance parameter of each path in the N paths, and the method further comprises:
selecting, by the first subscription device from the N paths, M paths whose performance parameters meet a service requirement, wherein M is greater than or equal to 1; and
sending, by the first subscription device, a second subscription request to the first network device, wherein the second subscription request comprises an identifier of each path in the M paths.

14. The method according to claim 12 or 13, wherein the method further comprises:
receiving, by the first subscription device, second subscription data periodically sent by the first network device, wherein the second subscription data comprises the identifier and the performance parameter of each path in the M paths.

15. The method according to claim 12 or 13, wherein the method further comprises:
receiving, by the first subscription device, third subscription data sent by the first network device, wherein the third subscription data comprises a performance parameter of an i^{th} path in the M paths, and the performance parameter of the i^{th} path exceeds a threshold.

16. The method according to claim 11, wherein the method further comprises:
receiving, by the first subscription device, fourth subscription data periodically sent by the first network device, wherein the fourth subscription data comprises the identifier and a performance parameter of each path in the N paths.

17. The method according to claim 11, wherein the method further comprises:
receiving, by the first subscription device, fifth subscription data sent by the first network device, wherein the fifth subscription data comprises a performance parameter of a j^{th} path in the N paths, and the performance parameter of the j^{th} path exceeds a threshold.

18. A path subscription apparatus, wherein the apparatus comprises:
a receiving unit, configured to receive a first subscription request sent by a first subscription device, wherein the first subscription request comprises an identifier of the first subscription device and an identifier of a destination device;
a processing unit, configured to obtain first subscription data based on the identifier of the first subscription device and the identifier of the destination device, wherein the first subscription data comprises an identifier of each path in N paths, N is greater than 1, and any path in the N paths is used to implement communication between the first subscription device and the destination device; and
a sending unit, configured to send a first subscription response to the first subscription device, wherein the first subscription response comprises the first subscription data.

19. The apparatus according to claim 18, wherein
the receiving unit is further configured to receive a second subscription request sent by the first subscription device, wherein the second subscription request comprises an identifier of each path in M paths, M is greater than or equal to 1, and the M paths are comprised in the N paths;
the processing unit is further configured to obtain a performance parameter of each path in the M paths; and
the sending unit is further configured to send a second subscription response to the first subscription device, wherein the second subscription response comprises the performance parameter of each path in the M paths.

20. The apparatus according to claim 18, wherein the first subscription data further comprises a performance parameter of each path in the N paths.

21. The apparatus according to claim 20, wherein
the receiving unit is further configured to receive a second subscription request sent by the first subscription device, wherein the second subscription request comprises an identifier of each path in M paths, M is greater than or equal to 1, and the M paths are paths whose performance parameters meet a service requirement in the N paths.

22. The apparatus according to any one of claims 19 to 21, wherein
the processing unit is further configured to periodically obtain the performance parameter of each path in the M paths; and
the sending unit is further configured to periodically send second subscription data to the first subscription device, wherein the second subscription data comprises the identifier and the performance parameter of each path in the M paths.

23. The apparatus according to any one of claims 19 to 21, wherein
the processing unit is further configured to obtain the performance parameter of each path in the M paths; and
the sending unit is further configured to send third subscription data to the first subscription device after a performance parameter of an i^{th} path in the M paths exceeds a threshold, wherein the third subscription data comprises the performance parameter of the i^{th} path.

24. The apparatus according to claim 20, wherein
the processing unit is further configured to periodically obtain the performance parameter of each path in the N paths; and
the sending unit is further configured to periodically send fourth subscription data to the first subscription device, wherein the fourth subscription data comprises the identifier and the performance parameter of each path in the N paths.

25. The apparatus according to claim 20, wherein
the processing unit is further configured to obtain the performance parameter of each path in the N paths; and
the sending unit is further configured to send fifth subscription data to the first subscription device after a performance parameter of a j^{th} path in the N paths exceeds a threshold, wherein the fifth subscription data comprises the performance parameter of the j^{th} path.

26. The apparatus according to any one of claims 18 to 25, wherein
the sending unit is further configured to send a third subscription request to a control device, wherein the third subscription request comprises the identifier of the first subscription device and the identifier of the destination device; and
the receiving unit is further configured to receive a third subscription response sent by the control device, wherein the third subscription response comprises the first subscription data.

27. The apparatus according to any one of claims 18 to 25, wherein the processing unit is configured to obtain the first subscription data based on the cached identifier of each path in the N paths.

28. A path subscription apparatus, wherein the apparatus comprises:
a sending unit, configured to send a first subscription request to a first network device, wherein the first subscription request comprises an identifier of the apparatus and an identifier of a destination device; and
a receiving unit, configured to receive a first subscription response sent by the first network device, wherein the first subscription response comprises first subscription data, the first subscription data comprises an identifier of each path in N paths, N is greater than 1, and any path in the N paths is used to implement communication between the apparatus and the destination device.

29. The apparatus according to claim 28, wherein the apparatus further comprises a first processing unit, wherein
the first processing unit is configured to select M paths from the N paths, wherein M is greater than or equal to 1;
the sending unit is further configured to send a second subscription request to the first network device, wherein the second subscription request comprises an identifier of each path in the M paths; and
the receiving unit is further configured to receive a second subscription response sent by the first network device, wherein the second subscription response comprises a performance parameter of each path in the M paths.

30. The apparatus according to claim 28, wherein the first subscription data further comprises a performance parameter of each path in the N paths, and the apparatus further comprises a second processing unit, wherein
the second processing unit is configured to select, from the N paths, M paths whose performance parameters meet a service requirement, wherein M is greater than or equal to 1; and
the sending unit is further configured to send a second subscription request to the first network device, wherein the second subscription request comprises an identifier of each path in the M paths.

31. The apparatus according to claim 29 or 30, wherein
the receiving unit is further configured to receive second subscription data periodically sent by the first network device, wherein the second subscription data comprises the identifier and the performance parameter of each path in the M paths.

32. The apparatus according to claim 29 or 30, wherein
the receiving unit is further configured to receive third subscription data sent by the first network device, wherein the third subscription data comprises a performance parameter of an i^{th} path in the M paths, and the performance parameter of the i^{th} path exceeds a threshold.

33. The apparatus according to claim 28, wherein
the receiving unit is further configured to receive fourth subscription data periodically sent by the first network device, wherein the fourth subscription data comprises the identifier and a performance parameter of each path in the N paths.

34. The apparatus according to claim 28, wherein
the receiving unit is further configured to receive fifth subscription data sent by the first network device, wherein the fifth subscription data comprises a performance parameter of a j^{th} path in the N paths, and the performance parameter of the j^{th} path exceeds a threshold.

35. A path subscription system, wherein the system comprises the apparatus according to any one of claims 18 to 27 and the apparatus according to any one of claims 28 to 34.
